# EUROPÄISCHE PATENTSCHRIFT

(11) **EP 1 330 620 B1**
(45) Veröffentlichungstag und Bekanntmachung des Hinweises auf die Patenterteilung: **02.06.2004**
(21) Anmeldenummer: 01988839.5
(22) Anmeldetag: 18.10.2001
(51) Int. Cl.: F17C 3/10

(54) **SPEICHERBEHÄLTER FÜR KRYOGENE MEDIEN**
STORAGE CONTAINER FOR CRYOGENIC MEDIA
RESERVOIR DESTINE A DES AGENTS CRYOGENES

(30) Priorität: 24.10.2000 DE 10052856
(43) Veröffentlichungstag der Anmeldung: 30.07.2003
(73) Patentinhaber: Linde AG, 65189 Wiesbaden (DE)
(72) Erfinder: REESE, Wilfried-Henning, D-85716 Unterschleissheim (DE); WOLF, Joachim, D-81241 München (DE)
(74) Vertreter: Zahn, Christoph
(86) Internationale Anmeldenummer: PCT/EP2001/012057
(87) Internationale Veröffentlichungsnummer: WO 2002/035143

(56) Entgegenhaltungen:
- EP-A- 0 744 576
- US-A- 2 871 669
- US-A- 3 304 729
- US-A- 3 698 200
- US-A- 5 005 362
- PATENT ABSTRACTS OF JAPAN vol. 1998, no. 11, 30. September 1998 (1998-09-30) & JP 10 176796 A (IKEGAMI MAKOTO;TOKYO GAS CO LTD), 30. Juni 1998 (1998-06-30)

## Beschreibung

Die Erfindung betrifft einen Speicherbehälter für kryogene Medien, insbesondere für flüssigen Wasserstoff, aufweisend einen Außenbehälter, einen Innenbehälter, der der Speicherung des kryogenen Mediums dient, wenigstens eine dem Innenbehälter zugeordnete Entnahme- und Befüllleitung für das kryogene Medium und wenigstens einen weiteren, mit wenigstens einer weiteren Befüllleitung versehenen und mit der Entnahmeleitung in thermischer Wirkverbindung stehenden Speicherraum.

Im Folgenden werden bei den Bezeichnungen spezieller kryogener Medien entsprechend ihrem Aggregatzustand die Buchstaben "G" für "gasförmig" und "L" für "flüssig" bzw. "liquid" vorangestellt; also z. B. GH₂ bzw. LH₂ für gasförmigen bzw. flüssigen Wasserstoff.

Insbesondere Wasserstoff gewinnt gegenwärtig durch den steigenden Energiebedarf und das gestiegene Umweltbewußtsein als Energieträger zunehmend an Bedeutung. So werden bereits Lastkraftwagen, Busse sowie Personenkraftwagen mittels mit Wasserstoff-betriebenen Motoren bzw. Brennstoffzellen angetrieben. Darüber hinaus sind erste Versuche im Gange, Flugzeuge mit den genannten Medien anzutreiben.

Die Speicherung des Wasserstoffs "an Bord" der oben genannten Verkehrsmittel ist dabei in flüssiger Form am sinnvollsten. Zwar muss der Wasserstoff dazu auf etwa 21 K abgekühlt und auf dieser Temperatur gehalten werden - was nur durch entsprechende Isoliermaßnahmen an den Speicherbehältern bzw. -tanks realisiert . werden kann -, doch ist eine Speicherung in gasförmigem Zustand aufgrund der geringen Dichte von GH₂ in der Regel in den obengenannten Verkehrsmitteln ungünstiger, da die Speicherung hierbei in großvolumigen und schweren Speicherbehältem bei hohen Drücken erfolgen muss.

Gattungsgemäße Speicherbehälter für kryogene Medien, insbesondere für flüssigen Wasserstoff, sind seit langem - bspw. aus der US 3 304 729 A oder US 5 005 362 A bekannt Derartige Speicherbehälterkonstruktionen haben jedoch den Nachteil, dass das in dem weiteren Speicherraum vorzusehende Kühlmedium in regelmäßigen Abständen ersetzt bzw. zumindest ergänzt werden muss. Aus diesem Grunde eignen sich diese Speicherbehälterkonstruktionen nicht für die Anwendung in Lastkraftwagen, Bussen oder Personenkraftwagen.

Bekannte Speicherbehälter für flüssigen Wasserstoff - wie sie bisher in den vorgenannten Verkehrsmitteln zum Einsatz kommen - ermöglichen Standzeiten von 2 bis 3 Tagen, bevor es zu auf Grund des nicht zu verhindernden Wärmeeinfalles aus der Umgebung in dem Medium zu einem Temperatur- und Druckanstieg und damit zu einem Abdampfen von gasförmigem Wasserstoff kommt Die Akzeptanz von Wasserstoff als Energieträger - insbesondere bei Personenkraftwagen - wird u. a. auch von der möglichen Länge der Standzeit eines Personenkraftwagens abhängen. Ein Abblasen von Wasserstoff nach 2 bis 3 Tagen würde vom Kunden sicherlich nicht akzeptiert werden.

Aufgabe der vorliegenden Erfindung ist es, einen Speicherbehälter für kryogene Medien, insbesondere für Wasserstoff anzugeben, der eine längere Standzeit ermöglicht also den Wärmeeinfall auf das in ihm gespeicherte Medium verringert, was zur Folge hat, dass der Temperatur- und Druckanstieg im Inneren des Innenbehälters langsamer vonstatten geht.

Zur Lösung dieser Aufgabe wird ein Speicherbehälter vorgeschlagen, der dadurch gekennzeichnet ist, dass der Speicherraum über die weitere Befüllleitung (9, 10) mit der Umgebungsluft verbunden oder verbindbar ist

Hierbei ist die Wirkverbindung zwischen der oder den Entnahmeleitungen des Speicherbehälters und dem weiteren Speicherraum vorzugsweise in Form eines Wärmetauschers ausgebildet

Entsprechend vorteilhafter Ausgestaltungen des erfindungsgemäßen Speicherbehälters ist dem weiteren Speicherraum ein Schild, das den Innenbehälter vorzugsweise zumindest teilweise umgibt, zugeordnet und der weitere Speicherraum steht mit diesem Schild in Wärmekontakt.

Ergänzend oder alternativ dazu kann der weitere Speicherraum auch in Form eines Hohlkammerprofiles ausgebildet sein und den Innenbehälter des erfindungsgemäßen Speicherbehälters zumindest teilweise umgeben.

Der zwangsläufig auftretende Wärmeeinfall in den erfindungsgemäßen Speicherbehälter führt nun dazu, däss die in dem weiteren Speicherraum gelangte Umgebungsluft bzw. das mit dem weiteren Speicherraum verbundene Schild - dies besteht vorzugsweise aus Kupfer - erwärmt werden. Dies hat zur Folge, dass die Temperatur und damit auch der Druck in dem Innenbehälter zunächst im Wesentlichen unverändert bleiben bzw. in einem wesentlich geringeren Maße ansteigen als dies bei bekannten Speicherbehältern der Fall ist. Somit wird das Abdampfen des Mediums aus dem lnnenbehälter des Speicherbehälters verlangsamt, wodurch sich die Strandzeiten deutlich verlängern.

Wird nun der Innenbehälter des erfindungsgemäßen Speicherbehälters mit einem kryogenen Medium befüllt, so kommt es zu einer Verflüssigung der in dem weiteren Speicherraum befindlichen Luft. Im Falle einer längeren Standzeit wird die in dem weiteren Speicherraum befindliche Luft aufgrund des Wärmeeinfalles dann wieder erwärmt.

Die Verflüssigung der Luft kann jedoch nicht nur beim Befüllen des Speicherbehälters mit dem kryogenen Medium erfolgen, sondern auch - wie unten erläutert werden wird
- bei der Entnahme des kryogenen Mediums aus dem Speicherbehälter. Die Verflüssigung bei der Entnahme hat zusätzlich den Vorteil, dass die Wärmeenergie des entnommenen kalten Mediums genutzt wird.

Der vorgenannten Befüllleitung sind vorzugsweise Mittel zum Reinigen des in den weiteren Speicherraum geführten Mediums zugeordnet.

Hierbei sind diese Mittel zum Reinigen wiederum vorzugsweise als wenigstens ein Wärmetauscher, in dem ein Wärmetausch zwischen dem dem weiteren Speicherraum zugeführten Medium und dem aus dem Speicherbehälter abgezogenen kryogenen Medium erfolgt, ausgebildet.

Gelangt nunmehr beispielsweise Luft aus der Umgebung über die Befüllleitung nur dann in den weiteren Speicherraum, wenn der vorgenannte Wärmetausch mit dem aus dem Speicherbehälter abgezogenen kryogenen Medium erfolgt, so wirkt dieser Wärmetausch als Kältefalle für die in der Umgebungsluft enthaltene Feuchtigkeit sowie das in ihr enthaltene Kohlendioxid. Diese Komponenten kondensieren bereits während des Wärmetausches und können somit von der dem weiteren Speicherraum zuzuführenden Luftmenge abgetrennt werden. Ein Ausfrieren dieser Komponenten innerhalb des Leitungssystems wird dadurch wirkungsvoll verhindert.

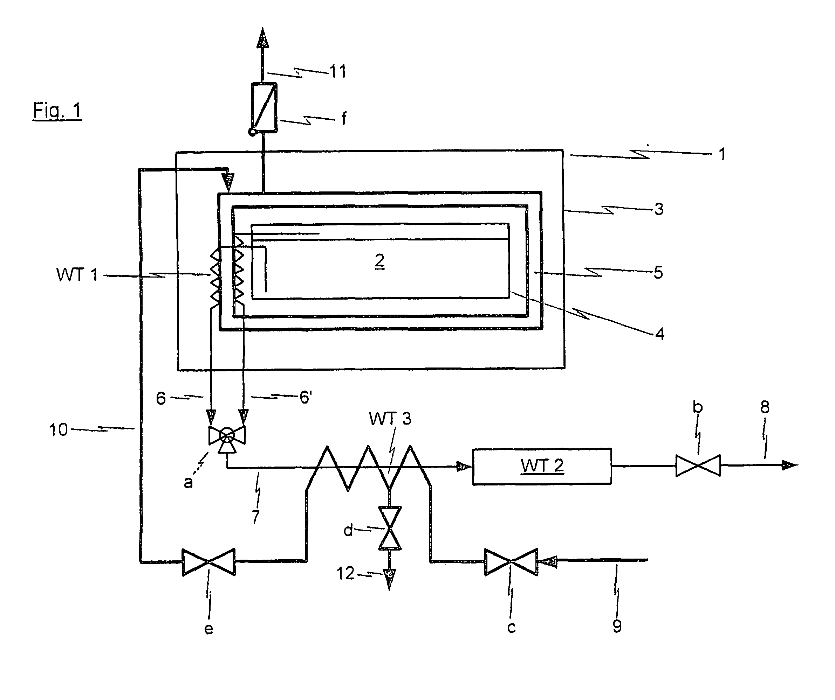

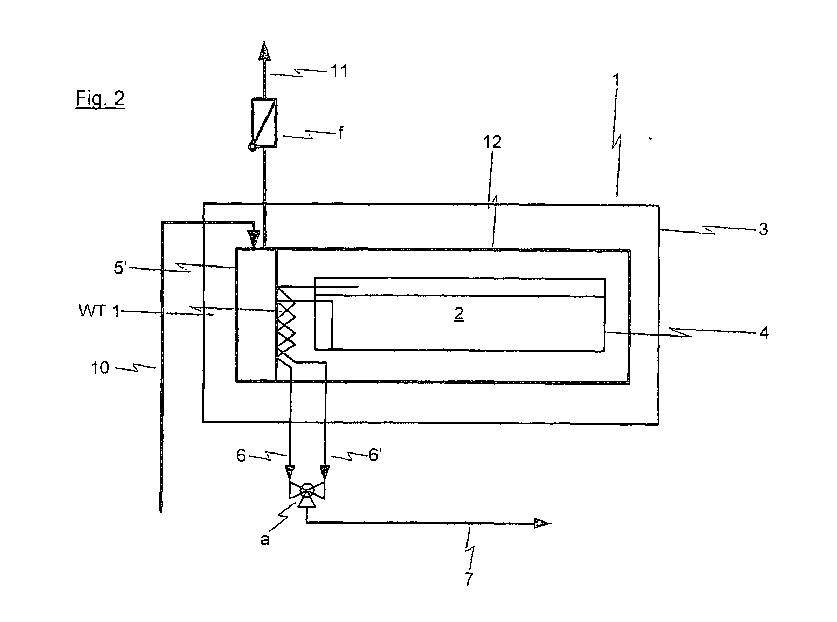

Der erfindungsgemäße Speicherbehälter sowie weitere Ausgestaltungen desselben seien anhand zweier, in den Figuren 1 und 2 dargestellter Ausführungsbeispiele näher erläutert.

Die Figur 1 zeigt eine erste Ausführungsform des erfindungsgemäßen Speicherbehälters 1, der einen Außenbehälter 3 sowie einen Innenbehälter 4 aufweist. Zwischen diesen ist vorzugsweise eine Superisolation vorgesehen. Das im Innenbehälter 4 befindliche kryogene Medium 2 - im vorliegenden Falle handelt es sich um flüssigen Wasserstoff - kann sowohl in flüssiger Form - über die Entnahmeleitung 6 - als auch in gasförmiger Form - über die Entnahmeleitung 6' - aus dem Speicherbehälter 1 bzw. dessen Innenbehälter 4 entnommen werden.

Die beiden Entnahmeleitungen 6 und 6' werden mittels eines Drei-Wege-Ventils a zu einer gemeinsamen Leitung 7 vereinigt. Der entnommene Wasserstoff wird nunmehr durch zwei Wärmetauscher WT 3 und WT 2 geführt und in diesen angewärmt. Während auf die Anwärmung des Wasserstoffes in dem Wärmetauscher WT 3 noch näher eingegangen wird, erfolgt in dem Wärmetauscher WT 2 eine weitere Anwärmung des Wasserstoffes gegen ein Kühlmedium, wie beispielsweise das Motorkühlwasser.

Über die Leitung 8, in der ein Regelventil b angeordnet ist, wird der Wasserstoff anschließend einem Antriebsaggregat und/oder einer Brennstoffzelle zugeführt.

Erfindungsgemäß ist im Inneren des Speicherbehälters 1 nunmehr ein weiterer Speicherraum 5 vorgesehen. Prinzipiell können jedoch auch zwei oder mehrere zusätzliche Speicherräume vorgesehen werden. Der weitere Speicherraum 5 umgibt bei dem in der Figur 1 dargestellten Ausführungsbeispiel den Innenbehälter 4 des erfindungsgemäßen Speicherbehälters 1 im Wesentlichen vollständig. Dies kann beispielsweise dadurch realisiert werden, dass der weitere Speicherraum 5 in Form eines Hohlkammerprofiles ausgebildet ist.

Über Leitung 9, in der ein Ventil c vorgesehen ist, wird dem bereits erwähnten WT 3 Umgebungsluft zugeführt. Diese wird in dem Wärmetauscher WT 3 gegen den anzuwärmenden Wasserstoffstrom in der Leitung 7 abgekühlt, wobei die unerwünschten Bestandteile wie Feuchtigkeit und Kohlendioxid auskondensieren und über Leitung 12, in der ebenfalls ein Ventil d angeordnet ist, abgezogen werden können. Der entfeuchtete und von Kohlendioxid gereinigte Luftstrom wird anschließend über Leitung 10, in der ein Ventil e angeordnet ist, dem im Inneren des Speicherbehälters 1 angeordneten weiteren Speicherraum 5 zugeführt.

Aus Sicherheitsgründen weist der weitere Speicherraum 5 eine Abführleitung 11 auf, in der ein Überdruckventil f, das bei Erreichen eines voreingestellten Druckwertes eine Abgabe über die Abführleitung 11 ermöglicht, angeordnet ist.

Der weitere Speicherraum 5 steht bei dem in der Figur 1 dargestellten Ausführungsbeispiel mit den beiden Entnahmeleitungen 6 und 6' derart in Wirkverbindung, dass ein Wärmeaustausch zwischen dem über die Entnahmeleitungen 6 und/oder 6' entnommenen Wasserstoff und der in dem weiteren Speicherraum 5 befindlichen verflüssigten Luft erfolgen kann - in der Figur 1 dargestellt durch den Wärmetauscher WT 1.

Die in dem weiteren Speicherraum 5 befindliche verflüssigte Luft wird bei dem erfindungsgemäßen Speicherbehälter 1 nunmehr bei jeder Wasserstoffentnahme - sei es über Entnahmeleitung 6 oder 6' - zwangsläufig über den Wärmeaustausch WT 1 abgekühlt.

Durch die Absenkung des Dampfdruckes der flüssigen Luft in dem Speicherraum 5 wird neue im Wärmetauscher WT 3 vorgekühlte Luft angesaugt und im Wärmetauscher WT 1 bzw. im Speicherraum 5 selbst verflüssigt. Um die Einbringung von Wasser und Kohlendioxid in den Speicherraum 5 zu verhindern und um eine Vorkühlung der Luft zu erreichen, wird die angesaugte Luft im Wärmetauscher WT 3 auf eine Temperatur, die über der Verflüssigungstemperatur von Luft liegt, gekühlt. Wasser und Kohlendioxid schlagen sich als Eis an den kalten Flächen des Wärmetauschers WT 3 nieder. Die Regenerierung des Wärmetauschers WT 3 erfolgt bei jeder längeren Stillstandszeit des Fahrzeugs.

Die Ventile e und c werden geschlossen, wenn keine Wasserstoffentnahme aus dem Innenbehälter 4 erfolgt. Der Wärmetauscher WT 3 wird zu diesen Zeiten aufgrund von Wärmeeinfall aus der Umgebung oder durch einen eingebauten, in den Figuren 1 und 2 nicht dargestellten Heizer angewärmt. Wasser und Kohlendioxid werden wieder flüssig bzw. gasförmig und über das Ventil d an die Umgebung abgegeben. Es ist zu beachten, dass das Ventil e erst dann (wieder) geöffnet wird, wenn der Wärmetauscher WT 3 eine Temperatur erreicht hat, die das Ausfrieren von Wasser und Kohlendioxid erlaubt, um einen Eintrag dieser Stoffe in den weiteren Speicherraum 5 zu verhindern.

In der Figur 2 ist eine zweite Ausführungsform des erfindungsgemäßen Speicherbehälters 1 dargestellt, wobei jedoch auf die Darstellung sämtlicher in der Figur 1 gezeigter Bauteile verzichtet ist.

Während bei dem in der Figur 1 dargestellten Ausführungsbeispiel der weitere Speicherraum 5 den Innenbehälter 4 des erfindungsgemäßen Speicherbehälters 1 im Wesentlichen vollständig umgibt, ist nunmehr im Inneren des erfindungsgemäßen Speicherbehälters 1 ein weiterer Speicherraum 5' angeordnet, dem ein Schild 12 zugeordnet ist und mit dem der weitere Speicherraum 5' in Wärmekontakt steht. Der Schild 12 umgibt dabei den Innenbehälter 4 vorzugsweise im Wesentlichen vollständig.

Durch eine entsprechende Wahl des Materials bzw. der Materialien für den Schild 12 erreicht diese Ausführungsform der Erfindung eine äquivalente Abschirmung des Innenbehälters 4 verglichen mit der Konstruktion gemäß dem in der Figur 1 dargestellten Ausführungsbeispiel.

## Patentansprüche

1. Speicherbehälter für kryogene Medien, insbesondere für flüssigen Wasserstoff, aufweisend einen Außenbehälter, einen Innenbehälter, der der Speicherung des kryogenen Mediums dient, wenigstens eine dem Innenbehälter zugeordnete Entnahme- und Befüllleitung für das kryogene Medium und wenigstens einen weiteren, mit wenigstens einer weiteren Befüllleitung versehenen und mit der Entnahmeleitung in thermischer Wirkverbindung stehenden Speicherraum, **dadurch gekennzeichnet, dass** der Speicherraum (5, 5') über die weitere Befüllleitung (9, 10) mit der Umgebungsluft verbunden oder verbindbar ist

2. Speicherbehälter für kryogene Medien nach Anspruch 1, **dadurch gekennzeichnet, dass** die Wirkverbindung zwischen zumindest der Entnahmeleitung (6, 6') und dem Speicherraum (5, 5') in Form eines Wärmetauschers (WT 1) ausgebildet ist

3. Speicherbehälter für kryogene Medien nach Anspruch 1 oder 2, **dadurch gekennzeichnet, dass** dem Speicherraum (5, 5') ein Schild (12), das den Innenbehälter (4) vorzugsweise zumindest teilweise umgibt, zugeordnet ist und mit diesem in Wärmekontakt steht

4. Speicherbehälter für kryogene Medien nach einem der vorhergehenden Ansprüche, **dadurch gekennzeichnet, dass** der Speicherraum (5) in Form eines Hohlkammerprofiles ausgebildet ist und den Innenbehälter (4) zumindest teilweise umgibt.

5. Speicherbehälter für kryogene Medien nach einem der vorhergehenden Ansprüche, **dadurch gekennzeichnet, dass** der weiteren Befüllleitung (9. 10) Mittel zum Reinigen des in den Speicherraum (5, 5') geführten Mediums zugeordnet sind.

6. Speicherbehälter für kryogene Medien nach Anspruch 5, **dadurch gekennzeichnet, dass** die Mittel zum Reinigen des in den Speicherraum (5, 5') geführten Mediums als wenigstens ein Wärmetauscher (WT 3), in dem ein Wärmetausch zwischen dem dem Speicherraum (5, 5') zugeführten Medium und dem aus dem Speicherbehälter (1) abgezogenen kryogenen Medium erfolgt, ausgebildet sind.

7. Speicherbehälter für kryogene Medien nach einem der vorhergehenden Ansprüche, **dadurch gekennzeichnet, dass** dem Speicherraum (5, 5') wenigstens eine Abführleitung (11) zugeordnet ist.

8. Speicherbehälter für kryogene Medien nach Anspruch 7, **dadurch gekennzeichnet, dass** in der Abführleitung (11) ein Überdruckventil (f) angeordnet ist

9. Verwendung eines Speicherbehälters für kryogene Medien nach einem der vorhergehenden Ansprüche als Speicherbehälter für Kraftfahrzeuge, die mit flüssigem Wasserstoff betrieben werden.

## Claims

1. Storage container for cryogenic media, in particular for liquid hydrogen, having an outer container, an inner container, which is used to store the cryogenic medium, at least one removal and filling line, which is assigned to the inner container, for the cryogenic medium, and at least one further storage space, which is provided with at least one further filling line and is operatively connected in thermal terms to the removal line, **characterized in that** the storage space (5, 5') is or can be connected to the ambient air via the further filling line (9, 10).

2. Storage container for cryogenic media according to Claim 1, **characterized in that** the operative connection between at least the removal line (6, 6') and the storage space (5, 5') is designed in the form of a heat exchanger (WT1).

3. Storage container for cryogenic media according to Claim 1 or 2, **characterized in that** the storage space (5, 5') is assigned a shield (12), which preferably at least partially surrounds the inner container (4), and is in thermal contact with the shield.

4. Storage container for cryogenic media according to any one of the preceding claims, **characterized in that** the storage space (5) is designed in the form of a hollow chamber profile and at least partially surrounds the inner container (4).

5. Storage container for cryogenic media according to any one of the preceding claims, **characterized in that** the further filling line (9, 10) is assigned means for purifying the medium which is passed into the storage space (5, 5').

6. Storage container for cryogenic media according to Claim 5, **characterized in that** the means for purifying the medium passed into the storage space (5, 5') are designed as at least one heat exchanger (WT3), in which heat exchange takes place between the medium fed to the storage space (5, 5') and the cryogenic media extracted from the storage container (1).

7. Storage container for cryogenic media according to any one of the preceding claims, **characterized in that** the storage space (5, 5') is assigned at least one discharge line (11).

8. Storage container for cryogenic media according to Claim 7, **characterized in that** a pressure release valve (f) is arranged in the discharge line (11).

9. Use of a storage container for cryogenic media according to any one of the preceding claims as a storage container for motor vehicles which are operated with liquid hydrogen.

## Revendications

1. Réservoir de stockage pour des agents cryogènes, notamment pour de l'hydrogène liquide, présentant un réservoir extérieur, un réservoir intérieur, destiné à stocker l'agent cryogène, au moins une conduite de soutirage et de remplissage de l'agent cryogène, associée au réservoir intérieur et au moins un compartiment de stockage supplémentaire, muni d'au moins une conduite de remplissage supplémentaire et se trouvant en liaison thermique active avec la conduite de soutirage, **caractérisé en ce que** le compartiment de stockage (5, 5') est relié ou peut être relié à l'air ambiant par l'intermédiaire de la conduite de remplissage supplémentaire (9, 10).

2. Réservoir de stockage pour des agents cryogènes selon la revendication 1, **caractérisé en ce que** la liaison active entre au moins la conduite de soutirage (6, 6') et le compartiment de stockage (5, 5') est conçue sous forme d'un échangeur thermique (WT 1) .

3. Réservoir de stockage pour des agents cryogènes selon l'une quelconque des revendications 1 ou 2, **caractérisé en ce qu'**un panneau (12) entourant de préférence au moins partiellement le réservoir intérieur (4) est associé au compartiment de stockage (5, 5') et qu'il est en contact thermique avec ce dernier.

4. Réservoir de stockage d'agents cryogènes selon l'une quelconque des revendications précédentes, **caractérisé en ce que** le compartiment de stockage (5) est conçu sous forme d'un profilé à chambre creuse et qu'il entoure au moins partiellement le réservoir intérieur (4).

5. Réservoir de stockage pour des agents cryogènes selon l'une quelconque des revendications précédentes, **caractérisé en ce que** des moyens de purification de l'agent transporté vers le compartiment de stockage (5, 5') sont associés à la conduite de remplissage supplémentaire (9,10).

6. Réservoir de stockage pour des agents cryogènes selon la revendication 5, **caractérisé en ce que** les moyens de purification de l'agent transporté vers le compartiment de stockage (5, 5') sont conçus sous forme d'au moins un échangeur thermique (WT 3) dans lequel a lieu un échange thermique entre l'agent transporté vers le compartiment de stockage (5, 5') et l'agent cryogène soutiré du réservoir de stockage (1).

7. Réservoir de stockage pour des agents cryogènes selon l'une quelconque des revendications précédentes, **caractérisé en ce qu'**au moins une conduite d'évacuation (11) est associée au compartiment de stockage (5, 5').

8. Réservoir de stockage pour des agents cryogènes selon la revendication 7, **caractérisé en ce qu'**une soupape de surpression (f) est disposée dans la conduite d'évacuation (11).

9. Utilisation d'un réservoir de stockage pour des agents cryogènes selon l'une quelconque des revendications précédentes en tant que réservoir de stockage pour des véhicules automobiles qui sont exploités à l'hydrogène liquide.
